# NEUE EUROPÄISCHE PATENTSCHRIFT

(11) **EP 0 970 778 B2**
(45) Veröffentlichungstag und Bekanntmachung des Hinweises auf die Entscheidung über den Einspruch: **15.09.2004**
(45) Hinweis auf die Patenterteilung: 02.01.2002
(21) Anmeldenummer: 99112518.8
(22) Anmeldetag: 01.07.1999
(51) Int. Cl.: B23Q 5/04

(54) **Auswechselbare Motorspindel für eine Werkzeugmaschine**
Exchangable motor spindle for machine tool
Broche de moteur échangeable pour machine outil

(30) Priorität: 07.07.1998 DE 29812170 U
(43) Veröffentlichungstag der Anmeldung: 12.01.2000
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas H., Dipl.-Ing.

(56) Entgegenhaltungen:
- WO-A-96/39274
- DE-A- 4 239 769
- DE-U- 9 100 557
- DE-U- 29 520 427
- US-A- 4 957 398
- PATENT ABSTRACTS OF JAPAN vol. 016, no. 325 (M-1280), 15. Juli 1992 (1992-07-15) & JP 04 093106 A (TOSHIBA MACH CO LTD), 25. März 1992 (1992-03-25)

## Beschreibung

Die Erfindung betrifft eine auswechselbare Motorspindel für eine Werkzeugmaschine mit einem Tragzapfen, der in einer Aufnahme der Hauptspindel der Werkzeugmaschine befestigbar ist, und einem an dem Tragzapfen befestigten Gehäuse, das einen Elektromotor und eine von diesem drehend antreibbare Spindel mit einer Werkzeugaufnahme für ein Werkzeug zur spanenden Werkstückbearbeitung enthält (siehe WO 96/39274).

Motorspindeln werden in spanenden Werkzeugmaschinen zur Durchführung bestimmter Bearbeitungsvorgänge verwendet. Sie haben einen mitsehr hoher Drehzahl umlaufenden Elektromotor kompakter Bauart mit einer als Spindel dienenden Motorwelle, die das Bearbeitungswerkzeug, zum Beispiel einen Fräskopf, trägt. Aus WO 96/39274 ist eine auswechselbare Motorspindel der angegebenen Art bekannt, bei der an dem Gehäuse der Motorspindel ein Tragzapfen befestigt ist, der z.B. in die Werkzeugaufnahme der Hauptspindel einer Werkzeugmaschine einsetzbar ist. Das Werkzeug ist hierbei mittels einer Werkzeugkupplung mit der Spindel der Motorspindel verbunden und kann nur von Hand, beispielsweise zum Zweck der Emeuerung, von diesergelöst werden. Will man bei einer CNC-gesteuerten Werkzeugmaschine beim Arbeiten mit einer Motorspindel einen automatischen Werkzeugwechsel durchführen, so muß jeweils die Einheit aus Motorspindel und Werkzeug gewechselt werden. Es muß daher für jedes einzusetzende Werkzeug eine Motorspindel bereit gehalten werden, die zusammen mit dem Werkzeug automatisch gewechselt werden kann. Neben dem Kostenaufwand für die Anschaffung mehrerer Motorspindeln ist hierbei auch der größere Platzbedarf in der Werkzeugablage von Nachteil.

Es sind weiterhin Werkzeugmaschinen mit einer fest installierten, als Hauptspindel dienenden Motorspindel bekannt, bei denen die Werkzeugaufnahme der Motorspindel mit einer Vorrichtung zum automatischen Werkzeugwechsel ausgerüstet ist.

Der Erfindung liegt die Aufgabe zugrunde, eine auswechselbare Motorspindel der eingangs genannten Art zu schaffen, bei der das Werkzeug an der Motorspindel automatisch gewechselt werden kann.

Diese Aufgabe wird bei einer Motorspindel der eingangs genannten Art erfindungsgemäß dadurch gelöst, daß die Spindel als Hohlwelle ausgebildet ist und in ihrer Längsbohrung eine durch Federkraft in einer Schließstellung gehaltene Schnellspannvorrichtung zum Festspannen eines Werkzeugs oder eines Werkzeughalters aufweist und daß an dem Gehäuse koaxial zur Spindel ein Zylinder mit einem durch Druckluft bewegbaren Betätigungskolben angeordnet ist, durch den die Spannvorrichtung mittels eines in der Längsbohrung der Spindel axial verschiebbaren Stößels in eine Lösestellung bewegbar ist.

Mit der Erfindung wird eine Motorspindel geschaffen, die in CNC-gesteuerten Werkzeugmaschinen automatisch anstelle eines langsam laufenden Werkzeugs in die Werkzeugaufnahme der Hauptspindel eingesetzt werden kann, um für bestimmte Bearbeitungsvorgänge hochtourig antreibbare Werkzeuge verwenden zu können. Diese mit Hilfe der Motorspindel angetriebenen Werkzeuge können erfindungsgemäß ebenfalls automatisch gewechselt werden, ohne daß ein Auswechseln der Motorspindel erforderlich ist. Es ist daher für den Antrieb hochtourig anzutreibender Werkzeuge nur eine einzige Motorspindel erforderlich, so daß keine Kosten für die Anschaffung weiterer Motorspindeln entstehen. Ein weiterer Vorteil ist darin zu sehen, daß für die Unterbringung der Werkzeuge, die mit der Motorspindel angetrieben werden, n ur ein kleines Werkzeugmagazin benötigt wird, da beim Werkzeugwechsel die Werkzeuge allein und nicht jeweils zusammen mit einer Motorspindel im Magazin abgelegt werden.

Fällt die Drehachse der Spindel mit der Drehachse der Hauptspindel zusammen, so ist vorzugsweise der Zylinder zwischen dem Tragzapfen und dem Gehäuse angeordnet. Vorzugsweise besteht der Zylinder aus lösbar mit dem Gehäuse und dem Tragzapfen verbundenen Teilen, die mit Hilfe von Zentrierflächen zueinander, zum Gehäuse und zum Tragzapfen zentriert sind. Hierdurch wird eine formschlüssige und sehr genau herstellbare Mittenausrichtung von Tragzapfen und Motorspindel erreicht, so daß beim Einsetzen der Motorspindel in die Hauptspindel die Mittenposition des Werkzeugs der Motorspindel definiert ist und nicht neu eingemessen werden muß. Der Zylinder kann vorteilhaft aus einem topfförmigen, mit dem Gehäuse verbindbaren Bodenteil und einem mit dem Tragzapfen verbindbaren Deckelteil bestehen, die mittels Zentrferflächen zueinander zentriert und durch achsparallele Schrauben miteinander verbunden sind.

Nach einer Betätigung der Schnellspannvorrichtung zum Einsetzen eines neuen Werkzeugs ist es erforderlich, daß der Betätigungskolben in seine Ausgangsstellung zurückgefahren wird, in der zwischen dem Betätigungskolben, der Spindel und dem Stößel ein Zwischenraum vorhanden ist, damit sich die Spindel mit dem darin gelagerten Stößel frei drehen kann. Zum Zurückfahren des Betätigungskolbens in die Ausgangsstellung kann zwischen dem Boden des Zylinders und dem Betätigungskolben eine Rückstellfeder vorgesehen sein. Alternativ hierzu ist es auch möglich, den Raum zwischen dem Boden des Zylinders und dem Betätigungskolben mit Druckluft zu beaufschlagen.

Erfindungsgemäß kann weiterhin vorgesehen sein, daß der Betätigungskolben eine zentrale Durchgangsbohrung hat, die mit der Längsbohrung der Spindel in Verbindung steht und in der eine Drosselblende vorgesehen ist und daß in der Längsbohrung der Spindel ein in der Werkzeugaufnahme der Spindel mündender freier Strömungspfad ausgebildet ist. Hierdurch kann bei Beaufschlagung des Betätigungskolbens mit Druckluft eine durch die Drosselblende definierte, den Betätigungsdruck nicht beeinträchtigende Luftmenge durch die Durchgangsbohrung und die Längsbohrung in den Aufnahmekegel der Werkzeugaufnahme gelangen, um beim Einsetzen eines neuen Werkzeugs eventuell an dem Werkzeugkegel anhaftende Schmutzpartikel von den Spannflächen zu entfernen.

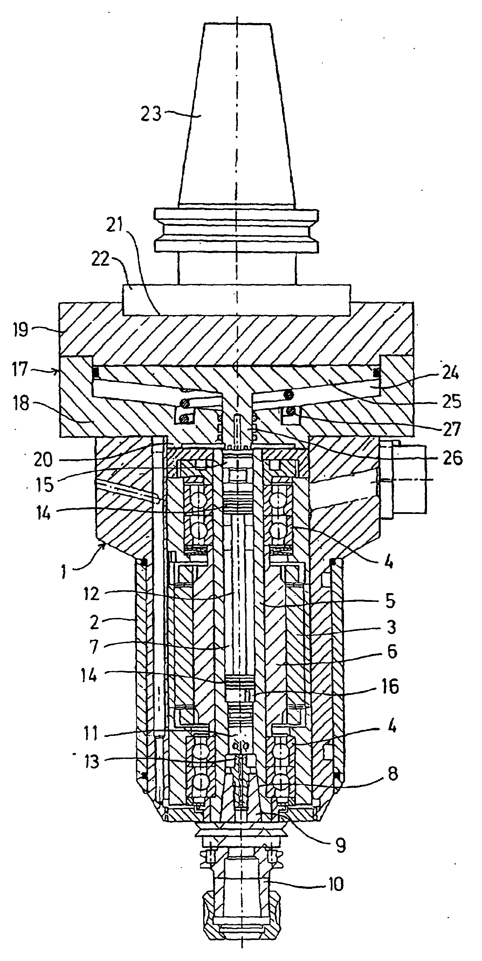

Die Erfindung wird nachfolgend anhand eines Ausführungsbeispiels näher erläutert, das in der Zeichnung dargestellt ist.

Die Zeichnung zeigt einen Axialschnitt durch eine Motorspindel 1, die aus einem mehrteiligen Gehäuse 2, einer Statorwicklung 3 und einer mittels Wälzlagern 4 gelagerten Spindel 5 mit einem Rotor 6 besteht. Die Spindel 5 ist mit einer durchgehenden Längsbohrung 7 versehen, die an dem in der Zeichnung unteren Ende in eine Kegelbohrung 8 zurAufnahmeeines Werkzeugkegels 9 mündet. Der Werkzeugkegel 9 kann entweder unmittelbar an einem Bearbeitungswerkzeug oder, wie in der Zeichnung dargestellt, an einem Werkzeughalter 10 angebracht sein. In der Längsbohrung 7 ist axial verschiebbar eine Schnellspannvorrichtung 11 und ein mit dieser fest verbundener Stößel 12 axial verschiebbar gelagert. Die Schnellspannvorrichtung 11 wirkt mit einem Spannzapfen 13 zusammen, der an dem Werkzeugkegel 9 befestigt ist. In der in der Zeichnung dargestellten Spannposition wird der Spannzapfen 13 von der Schnellspannvorrichtung 11 formschlüssig umgriffen und durch die Kraft von vorgespannten Tellerfedem 14 in die Spindel 5 hineingezogen, wodurch der Werkzeugkegel 9 in der Kegelbohrung 8 festgespannt wird. Die Tellerfedem 14 sind auf dem Stößel 12 angeordnet und stützen sich in axialer Richtung an dem Kopf 15 des Stößels 12 einerseits und an einem Anschlagring 16 andererseits ab, der an einer Schulter in der Längsbohrung 7 anliegt.

An das obere Ende des Gehäuses 2 ist ein Zylinder 17 angeflanscht, der aus einem topfförmigen Bodentell 18 und einem Deckelteil 19 besteht. Das Bodenteil 18 ist mittels in der Zeichnung nicht dargestellter Schrauben an dem Gehäuse 2 befestigt und weist einen Ansatz 20 mit einer Zentrierfläche auf, der spielfrei in eine zentrale Gehäusebohrung eingreift. Das Deckelteil 19 ist mit einer zentralen, zylindrischen Vertiefung 21 versehen, in der ein zylindrischer Flansch 22 eines Tragzapfens 23 mittels Schrauben befestigt ist. Der Zylinder 17 umschließt eine Zylinderkammer 24, in der sich ein Betätigungskolben 25 befindet. Ein zylindrischer Kolbenansatz 26 des Betätigungskolbens 25 erstreckt sich durch eine Bohrung im Bodenteil 18 hindurch und endet in der dargestellten Ruheposition des Betätigungskolbens 25 in einem geringen Abstand von dem Kopf 15 des Stößels 12. Der Betätigungskolben 25 wird durch eine Rückstellfeder 27 in der dargestellten Ruhelage gehalten.

Soll der Werkzeughalter 10 mit einem daran befestigten Werkzeug gewechselt werden, so wird nach dem Stillsetzen der Spindel 5 über eine nicht näher dargestellte Anschlußleitung die dem Deckelteil 19 zugekehrte Seite des Betätigungskolbens 25 mit Druckluft beaufschlagt. Hierdurch wird der Betätigungskolben 25 entgegen der Kraft der Rückstellfeder 27 nach unten bewegt. Der Kolbenansatz 26 kommt hierbei mit dem Kopf 15 des Stößels 12 in Kontakt und drückt entgegen der Kraft der Tellerfedem 14 den Stößel 12 mit der Schnellspannvorrichtung 11 soweit nach unten, daß der Spannzapfen 13 von der Schnellspannvorrichtung 11 freigegeben und der Werkzeugkegel 9 gelöst wird. Der Werkzeughalter 10 und das daran befestigte Werkzeug können auf diese Weise automatisch in einem Werkzeugmagazin abgelegt werden. Zum Einsetzen eines neuen Werkzeugs wird anschließend mit der Motorspindel 1 das neue Werkzeug angefahren und durch Entlüften der Zylinderkammer 24 wird mit Hilfe der Kraft der Tellerfedem 14 der Spannzapfen 13 des neuen Werkzeugs von der Spannvorrichtung 11 gegriffen und in der Kegelbohrung 8 der Spindel 5 festgespannt. Gleichzeitig drückt die Rückstellfeder27 den Betätigungskolben 25 in seine Ruhelage zurück, so daß die Spindel 5 sich wieder ungehindert drehen kann.

## Patentansprüche

1. Auswechselbare Motorspindel für eine Werkzeugmaschine mit einem Tragzapfen, der an einer Aufnahme der Hauptspindel der Werkzeugmaschine befestigbar ist, und einem an dem Tragzapfen befestigten Gehäuse, das einen Elektromotor und eine von diesem drehend antreibbare Spindel mit einer Werkzeugaufnahme für ein Werkzeug zur spanenden Werkstückbearbeitung enthält, **dadurch gekennzeichnet, daß** die Spindel (5) als Hohlwelle ausgebildet ist und in ihrer Längsbohrung (7) eine durch Federkraft in einer Schließstellung gehaltene Schnellspannvorrichtung (11) zum Festspannen eines Werkzeugs oder eines Werkzeughalters (10) aufweist und daß an dem Gehäuse (2) koaxial zur Spindel (5) ein Zylinder (17) mit einem durch Druckluft bewegbaren Betätigungskolben (25) angeordnet ist, durch den die Spannvorrichtung (11) mittels eines in der Längsbohrung (7) der Spindel (5) axial verschiebbaren Stößels (12) in eine Lösestellung bewegbar ist.

2. Motorspindel nach Anspruch 1, **dadurch gekennzeichnet, daß** der Zylinder (17) zwischen dem Tragzapfen (23) und dem Gehäuse (2) angeordnet ist.

3. Motorspindel nach Anspruch 2, **dadurch gekennzeichnet, daß** der Zylinder (17) aus lösbar mit dem Gehäuse (2) und dem Tragzapfen (23) verbundenen Teilen (18, 19) besteht, die mit Hilfe von Zentrierflächen zueinander, zum Gehäuse (2) und zum Tragzapfen (23) zentriert sind.

4. Motorspindel nach einem der vorhergehenden Ansprüche, **dadurch gekennzeichnet, daß** der Zylinder (17) aus einem topfförmigen, mit dem Gehäuse verbindbaren Bodenteil (18) und einem mit dem Tragzapfen (23) verbindbaren Deckelteil (19) besteht, die mittels Zentrierflächen zueinander zentriert und durch achsparallele Schrauben miteinander verbunden sind.

5. Motorspindel nach einem der vorhergehenden Ansprüche, **dadurch gekennzeichnet, daß** in der Ruhestellung des Betätigungskolbens (25) zwischen dem Betätigungskolben (25), der Spindel (5) und dem Stößel (12) ein Zwischenraum vorhanden ist und daß Mittel (27) vorgesehen sind, die den Betätigungskolben (25) nach einer Betätigung in die Ruhestellung zurückbewegen.

6. Motorspindel nach einem der vorhergehenden Ansprüche, **dadurch gekennzeichnet, daß** der Betätigungskolben (25) eine zentrale Durchgangsbohrung hat, die mit der Längsbohrung (7) der Spindel (5) in Verbindung steht und in der eine Drosselblende vorgesehen ist und daß in der Längsbohrung (7) der Spindel (5) ein in der Werkzeugaufnahme der Spindel (5) mündender Strömungspfad ausgebildet ist.

## Claims

1. An exchangeable motor spindle for a machine tool with a trunnion pin, which can be fixed to the main spindle of the machine tool on a cut-out, and a casing fastened to the trunnion pin, which includes an electric motor and a rotating spindle driven thereby for a tool for the processing of work pieces by removal of material, **characterised In that** the spindle (5) is formed as a hollow mandrel and has a quick-fastening device (11), held In a closed condition by spring pressure, in its longitudinal boring (7), for the rigid clamping of a tool or a tool holder (10) and that coaxially with the spindle (5) a cylinder (17) is arranged with an actuating piston (25) which can be moved by air pressure, by which the clamping device (11) can be moved Into a release position by an axially moveable plunger (12) In the longitudinal boring (7) of the spindle (5).

2. A motor spindle according to Claim 1, **characterised in that** the cylinder (17) is arranged between the trunnion pin (23) and the casing (2).

3. A motor spindle according to Claim 2, **characterised in that** the cylinder (17) comprises parts (18, 19) removably connected to the casing (2) and the trunnion pin (23), which are centred to each other, to the casing (2) and to the trunnion pin (23) with the aid of centering surfaces.

4. A motor spindle according to one of the foregoing claims, **characterised In that** the cylinder (17) comprises a pot shaped base part (18), which can be joined to the casing, and a cover part (19), which can be joined to the trunnion pin (23), which are centred by means of centering surfaces and joined together by screws parallel to the axis.

5. A motor spindle according to one of the foregoing claims, **characterised In that,** in the rest position of the actuating piston (25), an intervening space is present between the actuating piston (25), the spindie (5) and the plunger (12) and that means (27) are provided which move the actuating piston (25) back into the rest position following actuation.

6. A motor spindle according to one of the foregoing claims, **characterised In that** the actuating piston (25) has a central through boring, which is in connection with the longitudinal boring (7) of the spindle (5) and in which a throttle flap is provided and that in the longitudinal boring (7) of the spindle (5) a flow path is formed opening into the tool cut-out.

## Revendications

1. Broche de moteur échangeable pour machine-outil avec un tourillon d'appui pouvant être fixé dans un logement de l'arbre moteur de la machine-outil et avec un boîtier fixé au tourillon d'appui et contenant un moteur électrique ainsi qu'une broche pouvant être entraînée en rotation par ce moteur et qui est munie d'un logement pour outil pour un outil pour usinage par enlèvement de copeaux, **caractérisé en ce que** la broche (5) a la forme d'un arbre creux présentant dans son trou longitudinal (7) un dispositif de bridage rapide (11) maintenu en position verrouillée par une force de ressort pour serrer un outil ou un porte-outil (10), et **en ce qu'**est placé sur le boîtier (2) de façon coaxiale à la broche (5) un cylindre (17) avec un piston de commande (25) pouvant être déplacé au moyen de l'air sous pression et grâce auquel le dispositif de bridage (11) peut être déplacé en position de déverrouillage au moyen d'un coulisseau (12) pouvant coulisser de façon axiale dans le trou longitudinal (7) de la broche (5).

2. Broche de moteur selon la revendication 1, **caractérisé en ce que** le cylindre (17) est placé entre le tourillon d'appui (23) et le boîtier (2).

3. Broche de moteur selon la revendication 2, **caractérisé en ce que** le cylindre (17) est constitué de pièces (18, 19) amovibles reliées au boîtier (2) et au tourillon d'appui (23), ces pièces étant centrées l'une par rapport à l'autre, par rapport au boîtier (2) et par rapport au tourillon d'appui (23) à l'aide de surfaces de centrage.

4. Broche de moteur selon l'une des revendications précédentes, **caractérisé en ce que** le cylindre (17) est constitué d'un fond (18) en forme de pot pouvant être relié au boîtier et d'un couvercle (19) pouvant être relié au tourillon d'appui (23), ce fond et ce couvercle étant centrés l'un par rapport à l'autre au moyen de surfaces de centrage et reliés ensemble par des vis parallèles à l'axe.

5. Broche de moteur selon d'une des revendications précédentes, **caractériséen ce que**, lorsque le piston de commande (25) est en position de repos, il y a un espace libre entre le piston de commande (25), la broche (5) et le coulisseau (12) et en ce que des moyens (27) sont prévus pour ramener le piston de commande (25) en position de repos après actionnement.

6. Broche de moteur selon l'une des revendications précédentes, **caractérisé en ce que** le piston de commande (25) présente un trou de passage central qui est relié au trou longitudinal (7) de la broche (5) et dans lequel est prévu un orifice de jaugeage et **en ce qu'**une voie d'écoulement aboutissant dans le logement pour outil de la broche (5) est formée dans le trou longitudinal (7) de la broche (5).
